# FASCICULE DE BREVET EUROPEEN

(11) **EP 4 089 452 B1**
(45) Date de publication et mention de la délivrance du brevet: **28.08.2024**
(21) Numéro de dépôt: 22168718.9
(22) Date de dépôt: 19.04.2022
(51) Int. Cl.: G02B 6/12

(54) **SYSTÈME DE CONVERSION ÉLECTRO-OPTIQUE**
ELEKTROOPTISCHES UMWANDLUNGSSYSTEM
ELECTRO-OPTICAL CONVERSION SYSTEM

(30) Priorité: 20.04.2021 FR 2104085
(43) Date de publication de la demande: 16.11.2022
(73) Titulaire: Commissariat à l'Energie Atomique et aux Energies Alternatives, 75015 Paris (FR); Centre national de la recherche scientifique, 75016 Paris (FR); Université Paris Cité, 75006 Paris (FR)
(72) Inventeur: HENTZ, Sébastien, 38054 GRENOBLE CEDEX 09 (FR); FAVERO, Ivan, 75012 PARIS (FR); JOURDAN, Guillaume, 38054 GRENOBLE CEDEX 09 (FR); RENARD, Julien, 38170 SEYSSINET-PARISET (FR); ROCH, Nicolas, 38042 GRENOBLE CEDEX 09 (FR)
(74) Mandataire: Cabinet Camus Lebkiri

(56) Documents cités:
- EP-B1- 3 094 998
- US-B2- 10 788 687
- US-B2- 9 036 951
- US-B2- 9 260 289
- EINAT AVIGDOR ET AL: "Analysis of the optical force in the Micro Ring Resonator References and links", vol. 19, no. 21, 10 October 2011 (2011-10-10), pages 20405 - 20419, XP055864378, Retrieved from the Internet <URL:https://www.osapublishing.org/oe/fulltext.cfm?uri=oe-19-21-20405&id=222907>
- G. ARNOLD ET AL.: "Converting microwave and telecom photons with a silicon photonic nanomechanical interface", NATURE COMMUNICATIONS, vol. 11, 2020, XP002804874
- FAN LINRAN ET AL: "Superconducting cavity electro-optics: A platform for coherent photon conversion between superconducting and photonic circuits", vol. 4, no. 8, 17 August 2018 (2018-08-17), pages eaar4994 - 1, XP055866630, Retrieved from the Internet <URL:https://par.nsf.gov/servlets/purl/10076586> DOI: 10.1126/sciadv.aar4994

## Description

### DOMAINE TECHNIQUE

Le domaine technique est celui des dispositifs de conversion opto-mécanique permettant de convertir une excitation mécanique en une vibration lumineuse et inversement, et des systèmes de conversion électro-optique comprenant un tel dispositif. La présente technologie concerne en particulier un tel système, dans lequel le dispositif de conversion opto-mécanique comprend une cavité optique résonante couplée à un oscillateur micromécanique tel qu'un oscillateur de type MEMS ou NEMS. Un tel système peut en particulier être employé comme interconnexion quantique (« quantum interconnect » en anglais).

### ARRIERE-PLAN TECHNOLOGIQUE

Les applications de la physique quantique ont connu un fort développement ces dernières années dans le domaine du traitement et de l'échange d'information. Des progrès importants ont ainsi été réalisés dans le domaine du calcul quantique, pour lequel on opère sur des états quantiques (par exemple des Q-bits) de systèmes bien isolés de leur environnement, au lieu de réaliser des opérations logiques sur des bits classiques. Le domaine des télécommunications quantiques, essentiellement dans le domaine optique, ont aussi connu un fort développement.

Dans ce contexte, interfacer deux systèmes de calcul quantique distants l'un de l'autre, pour qu'ils puissent échanger entre eux des variables quantiques, avec une altération minime de ces variables (par exemple en préservant des propriétés d'intrication quantique) est un enjeu important.

Pour des échanges à longue distance, une communication optique (via des fibres optiques par exemple) est l'une des solutions la plus adaptée. Elle est notamment plus adaptée qu'une transmission par ligne électrique supraconductrice, qui nécessite d'être refroidie à très basse température et pour laquelle les distances typiques d'atténuation sont nettement plus faibles. Quant aux systèmes de calcul quantique, pour de nombreuses réalisations actuelles (par exemple basées sur des Q-bits supraconducteurs), ils mettent en oeuvre des phénomènes et mécanismes dont les fréquences typiques sont de l'ordre du Gigahertz.

Pour pouvoir interfacer un tel système avec un réseau de communication (quantique), il serait donc particulièrement intéressant de disposer d'un système de conversion entre le domaine des microondes (gigahertz) d'une part, et le domaine optique d'autre part (longueur d'onde de l'ordre du micron, soit une fréquence de l'ordre de la centaine de térahertz ou plus).

Dans ce contexte, l'article suivant décrit un système de conversion électro-optique permettant une conversion depuis la gamme des micro-ondes vers une longueur d'onde des télécoms optiques, et vis-versa : « Converting microwave and telecom photons with a silicon photonic nanomechanical interface », G. Arnold et al., Nature Communications volume 11, Article number: 4460 (2020).

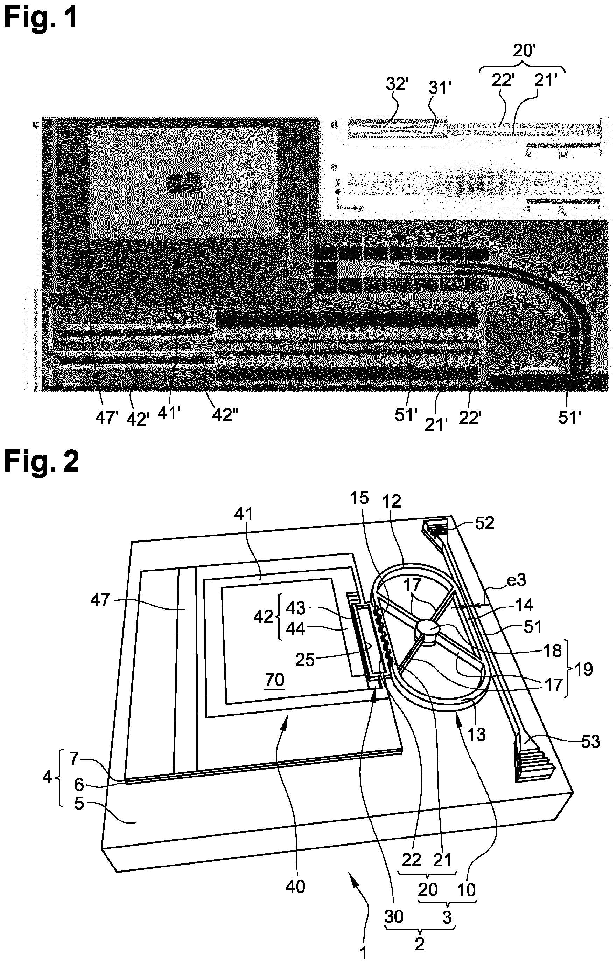

Ce système, visible sur la figure 1, comprend un circuit électrique résonant qui comporte une inductance 41' qui est réalisée sous la forme d'une piste électrique en spirale, et qui est reliée à un couple de deux condensateurs électriques 42' et 42". La fréquence de résonance de ce circuit est de l'ordre de 10 GHz environ. Il est couplé à une ligne de transmission électrique 47' qui passe à proximité de la piste électrique en question.

Ce système comprend aussi un élément optique 20' de type « fermeture éclair » (parfois appelé « zipper », ou « zipper cavity » en anglais), qui comporte un premier bras 21' et un deuxième bras 22' sensiblement parallèles entre eux et qui s'étendent en vis-à-vis l'un de l'autre, une ligne de trous répétés périodiquement étant réalisée sur chacun de ces bras. Ce résonateur optique a une fréquence de résonance d'environ 200 THz, correspondant à une longueur d'onde (dans le vide) de 1,5 micron environ. Il est couplé à une ligne de transmission optique 51' qui passe à proximité de ce résonateur (couplage par ondes évanescentes).

Le circuit électrique résonant et la cavité en fermeture éclair sont couplés l'un à l'autre par l'intermédiaire d'un système mécanique résonant qui comporte deux micropoutrelles 31' et 32'. L'une des deux électrodes du condensateur 42' est réalisée sur la micropoutrelle 31'. De même, l'une des deux électrodes du condensateur 42" est réalisée sur la micropoutrelle 32'. Cela permet un couplage électromécanique entre le résonateur électrique et le résonateur mécanique.

Par ailleurs, chacune de ces micropoutrelles 31' et 32' est formée dans le prolongement de l'un des bras 21', 22' de la cavité en fermeture éclair, si bien que l'oscillation en flexion de ces micropoutrelles déforme les bras de la cavité, en les écartant localement l'un de l'autre, ce qui permet un couplage opto-mécanique entre le résonateur mécanique et la cavité en fermeture éclair.

Ce système permet alors une conversion du domaine micro-onde vers celui des télécoms optiques.

Pour une conversion efficace, il est souhaitable que les coefficients de couplage électro-mécanique et opto-mécanique soient élevés. Il est souhaitable également que les pertes électriques, mécaniques et optiques dans chacun de ces résonateurs soient les plus faibles possibles (notamment dans la perspective d'un transfert de variables quantiques).

Il est souhaitable en particulier que les facteurs de qualité des résonateurs électriques et optiques soient très élevés. Cela permet entre autres de remplir la condition dite des bandes latérales résolues, grâce à laquelle un refroidissement du résonateur mécanique peut être réalisé par pompage de phonons (« side-band cooling » en anglais), ce qui permet d'amener ce résonateur dans son état quantique fondamental.

Dans le système décrit dans l'article de G. Arnold et al. mentionné ci-dessus, la cavité en fermeture éclair 20' permet un couplage opto-mécanique efficace. Elle permet aussi une intégration compacte, en optique intégrée. Mais son facteur de qualité (facteur de qualité intrinsèque, sans tenir compte du couplage à la ligne de transmission optique) reste limité, égal à 1,3. 10⁵ environ (ce qui est notamment incompatible avec un refroidissement par bande latérale).

### RESUME

Dans ce contexte, on propose un système de conversion électro-optique, comprenant :
- un dispositif de conversion opto-mécanique qui comporte :
   - une cavité en anneau, formée d'un guide d'onde optique qui s'étend le long d'une courbe fermée annulaire,
   - un résonateur micromécanique qui comprend au moins une micropoutrelle, et
   - un élément de type « fermeture-éclair » intégré à la cavité en anneau, cet élément comportant un premier bras et un deuxième bras qui s'étendent parallèlement l'un à l'autre, en vis-à-vis l'un de l'autre, le premier bras étant réalisé sur une portion du guide d'onde en anneau tandis que le deuxième bras est réalisé sur la micropoutrelle, la micropoutrelle et ladite portion de guide étant séparées latéralement l'une de l'autre par un écart qui varie au moins localement lorsque la micropoutrelle oscille,
- le système comprenant également un condensateur électrique qui comporte une première électrode et une deuxième électrode, la première électrode se déplaçant par rapport à la deuxième électrode lors d'une oscillation de ladite micropoutrelle.

Les facteurs de qualité (intrinsèques) qui peuvent être obtenus en pratique pour une cavité en anneau en optique intégrée peuvent être très élevés, typiquement supérieurs à 10⁶. Ces facteurs de qualité sont généralement plus élevés que pour une cavité fermeture éclair usuelle, où le confinement tridimensionnel du champ optique est produit par la ligne de motifs répétés, en l'absence d'anneau.

Les cavités en fermeture éclair permettent quant à elles d'obtenir des coefficients de couplage opto-mécanique élevés.

Intégrer un élément de type fermeture éclair le long d'une cavité en anneau permet, pour la cavité optique composite ainsi obtenue, d'obtenir un bon compromis entre un facteur de qualité élevé et un coefficient de couplage optomécanique élevé. Le fait de reboucler sur lui-même l'élément de type fermeture éclair, au moyen du guide d'onde en anneau, permet en particulier d'éviter les pertes optiques qui se produisent habituellement aux deux extrémités d'une cavité fermeture éclair linéaire telle que celle de l'art antérieur précité (G. Arnold et al.). Ce système composite permet d'ajuster les performances du dispositif (notamment en termes de facteur de qualité, de transmission optique, et de coefficient de couplage) avec plus de liberté.

Par élément de type fermeture éclair, appelé plus simplement élément fermeture-éclair dans la suite, on entend un élément comprenant les premier et un deuxième bras en question, réalisés dans un matériau transparent pour le rayonnement considéré, qui s'étendent parallèlement l'un à l'autre, en vis-à-vis l'un de l'autre, en étant séparés l'un de l'autre par un mince intervalle vide (ou rempli d'air, ou d'un autre gaz) et conformés de manière à confiner un champ électrique de fréquence optique entre et/ou dans les bras en question. Au moins l'un des bras est déformable (sous l'action de la pression de radiation et/ou d'un actionnement électro-mécanique), la largeur de l'intervalle en question variant lorsque ce bras se déforme. En particulier, on peut prévoir que l'un au moins des premier et deuxième bras présente une ligne de motifs répétés régulièrement le long de ce bras (ligne de motifs qui est éventuellement courbe, si le bras en question est courbe). Dans ce cas, le confinement du champ électromagnétique peut être modifié par la présence de la ligne de motifs. Ces motifs peuvent être répétés périodiquement ou semi-périodiquement le long du bras en question. Lorsque les motifs sont répétés semi-périodiquement, la distance entre deux motifs adjacents est égale à un même pas P pour les différents couples de motifs adjacents, mais à une certaine précision près, par exemple à 20% près, ou à 50%. En d'autres termes, une variation (par exemple inférieure à 50%, ou à 20%) de la distance entre deux motifs adjacents est possible, le long du bras considéré. Cette variation peut être régulière (par exemple constante) d'un motif à l'autre, et correspondre soit à une augmentation du pas d'un motif à l'autre, depuis le milieu du bras jusqu'à chacune de ses deux extrémités, soit à une diminution du pas depuis le milieu du bras jusqu'à chacune de ses deux extrémités. Cela permet alors une forme d'apodisation de l'élément fermeture éclair. De même, on pourrait prévoir que la forme (par exemple la profondeur) des motifs varie légèrement d'un motif à l'autre.

Le fait que les premier et deuxième bras s'étendent parallèlement l'un à l'autre ne signifie pas qu'ils soient nécessairement rectilignes. Chacun de ces deux bras peut très bien avoir une forme d'ensemble courbe (suivre une ligne courbe). Le fait que ces deux bras s'étendent parallèlement l'un à l'autre signifie qu'une distance qui sépare ces deux bras reste constante ou tout au moins sensiblement constante le long de l'élément fermeture éclair. En d'autres termes, chaque bras a une forme allongée et qui épouse l'autre bras (à faible distance de celui-ci). A titre d'exemple, lorsque ces deux bras sont rectilignes, ils peuvent être parallèles l'un à l'autre à mieux que 10 degrés près.

Outre les caractéristiques présentées ci-dessus, le système de conversion opto-mécanique présenté ci-dessus peut présenter une ou plusieurs des caractéristiques optionnelles suivantes, considérées individuellement ou selon toutes les combinaisons techniquement envisageables :
- l'un au moins des premier et deuxième bras présente une ligne de motifs répétés périodiquement ou semi-périodiquement le long de ce bras ;
- des rainures sont réparties périodiquement ou semi-périodiquement sur un flanc de ladite micropoutrelle situé en vis-à-vis d'un flanc de ladite portion de guide d'onde, ou, des rainures sont réparties périodiquement ou semi-périodiquement sur un flanc de ladite portion de guide d'onde située en vis-vis d'un flanc de ladite micropoutrelle ;
- lesdits motifs comprennent (par exemple prennent la forme de) des facettes planes faisant saillie, situées sur le flanc de ladite micropoutrelle ou sur le flanc de ladite portion de guide d'onde séparées deux à deux par lesdites rainures ;
- les facettes sont situées dans un même plan ;
- les motifs sont des créneaux ;
- lesdites rainures ont chacune un profil en trapèze, à fond plat, ou en triangle;
- les rainures ont chacune un fond incurvé, par exemple hémicirculaire ;
- les rainures sont perpendiculaires à un plan moyen dans lequel est située ladite cavité en anneau ; ledit plan moyen est le plan d'une couche dans laquelle est gravée la cavité en anneau, ainsi que la micropoutrelle ;
- un écart, qui sépare ladite portion du guide d'onde de ladite micropoutrelle au niveau desdites facettes planes, est inférieur à 0,1 micron ;
- la micropoutrelle comprend un flanc situé en vis-à-vis d'un flanc de ladite portion de guide d'onde ;
- ces deux flancs sont séparés l'un de l'autre, au moins par endroit, par une distance inférieure à 0,1 micron ;
- lesdits motifs sont des motifs internes au bras considéré, qui ne sont situés ni sur le flanc de la micropoutrelle ni sur le flanc de ladite portion de guide d'onde, tels par exemple que des trous traversant ladite portion de guide ou ladite micropoutrelle selon une direction perpendiculaire à un substrat supportant le système ;
- ladite ligne de motifs répétés périodiquement ou semi-prédioquement est située sur le premier bras de la cavité en fermeture éclair, et une autre ligne de motifs répétés périodiquement ou semi-périodiquement est présente aussi sur le deuxième bras de la cavité en fermeture éclair ;
- les motifs de ladite autre ligne ont la même forme (par exemple une forme en créneau, ou une forme de trou pratiqué dans la micropoutrelle ou dans ladite portion de guide d'onde) que les motifs de ladite ligne ;
- les motifs de ladite autre ligne sont répétés avec un pas qui est le même que le pas entre motifs de ladite ligne ;
- les motifs de ladite autre ligne sont situés chacun en face de l'un des motifs de ladite ligne (c'est-à-dire au droit de l'un des motifs de ladite ligne, en coïncidence avec ce motif) ;
- la micropoutrelle s'étend d'une première extrémité à une deuxième extrémité de la micropoutrelle, et est maintenue fixe à ces deux extrémités ;
- la cavité en anneau et la micropoutrelle sont gravées dans une couche supérieure en Silicium d'un substrat de type Silicium sur Isolant ;
- le résonateur micromécanique comprend une micropoutrelle supplémentaire, ladite micropoutrelle et ladite micropoutrelle supplémentaire se raccordant l'une à l'autre par l'une au moins de leurs extrémités respectives, le résonateur micromécanique ayant un mode d'oscillation symétrique pour lequel un centre de masse de l'ensemble comprenant la micropoutrelle et la micropoutrelle supplémentaire reste immobile (lors de l'oscillation des micropoutrelles en question) ;
- la micropoutrelle et la micropoutrelle supplémentaire sont gravées dans une membrane (par exemple au moins partiellement suspendue), formée d'un premier matériau ;
- la micropoutrelle supplémentaire est séparée d'une partie principale, fixe, de ladite membrane par une fente étroite qui s'étend parallèlement à ladite micropoutrelle supplémentaire ;
- une partie au moins d'une face supérieure de la micropoutrelle supplémentaire est recouverte par ladite première électrode, formée d'un deuxième matériau, électriquement conducteur ;
- ladite deuxième électrode s'étend côte à côte de la première électrode, parallèlement à la première électrode, et sur la partie principale fixe de ladite membrane, d'un autre côté de ladite fente ;
- ladite micropoutrelle a une face supérieure qui est essentiellement dépourvue dudit deuxième matériau électriquement conducteur ;
- le système comprend un circuit électrique résonant comportant ladite capacité électrique ainsi qu'une inductance ;
- ladite inductance comporte une piste électrique de très faible épaisseur réalisée dans un matériau supraconducteur choisi de sorte que ladite piste ait une forte inductance cinétique ;
- ladite épaisseur est inférieure à 20 ou même inférieure à 10 voire à 5 nanomètres ;
- le matériau supraconducteur est l'un des matériaux suivants : le nitrure de titane, le nitrure de niobium ou bien encore un matériau supraconducteur granulaire.

La présente technologie concerne également un procédé de fabrication d'un système de conversion électro-optique comprenant dispositif opto-mécanique, à partir d'un substrat comprenant une couche d'oxyde de silicium et une couche de silicium sur la couche d'oxyde de silicium, le procédé comprenant les étapes suivantes
- lithographie et gravure de la couche de silicium, selon un motif définissant :
   - un résonateur mécanique comprenant au moins une micropoutrelle,
   - une cavité en anneau formée par un guide d'onde optique qui s'étend le long d'une courbe fermée annulaire, et
   - un élément de type « fermeture éclair » intégré à la cavité en anneau, cet élément comportant un premier bras et un deuxième bras qui s'étendent parallèlement l'un à l'autre, en vis-à-vis l'un de l'autre, le premier bras étant réalisé sur une portion du guide d'onde en anneau tandis que le deuxième bras est réalisé sur la micropoutrelle, puis
- gravure de la couche en oxyde de silicium par attaque chimique, pour libérer le résonateur mécanique et la cavité en anneau,
le procédé comprenant également la réalisation, sur la couche de silicium, d'un condensateur électrique comportant une première électrode et une deuxième électrode, la première électrode se déplaçant par rapport à la deuxième électrode lors d'une oscillation de ladite micropoutrelle.

La présente technologie et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif.
[Fig. 1] La figure 1 représente schématiquement un système de conversion électro-mécanique de l'art antérieur.
[Fig. 2] La figure 2 représente schématiquement un nouveau système de conversion électro-mécanique, vu en perspective.
[Fig. 3] La figure 3 représente plus en détail un résonateur mécanique du système de la figure 2, vu en perspective.

### DESCRIPTION DETAILLEE

La figure 2 montre un système 1 de conversion électro-optique permettant de convertir des photons du domaine microonde en photons du domaine optique, et vice-versa.

Ce système 1 comprend :
- un circuit électrique résonant 40 qui comporte une inductance 41 et une capacité électrique, 42,
- un résonateur micromécanique 30 qui comporte au moins une, ici deux micropoutrelles 22 et 25, et
- un résonateur optique 3 composite qui comprend une cavité en anneau 10 qui intègre un élément « fermeture éclair » 20 dont l'un des bras, 21, est réalisé le long d'une portion de la cavité en anneau 10.

Le résonateur micromécanique 30 est couplé à ce résonateur optique 3, car le deuxième bras de l'élément fermeture éclair 20 est réalisé sur l'une des micropoutrelles, 22, du résonateur micromécanique. Une oscillation de cette première micropoutrelle 22 (en l'occurrence en flexion) modifie alors l'écart entre les premier et deuxième bras de l'élément fermeture éclair 20, ce qui permet de moduler les propriétés du résonateur optique 3 et d'obtenir ainsi un couplage entre le champ électrique confiné dans celui-ci d'une part (confiné en particulier au niveau de l'élément fermeture éclair), et le mouvement de la micropoutrelle 22 d'autre part.

Le résonateur micromécanique 30 est couplé également au circuit électrique résonant 40 car l'une des deux électrodes du condensateur 42 de ce circuit est réalisée sur l'une des deux micropoutrelles du résonateur micromécanique 30, en l'occurrence sur la micropoutrelle 25 (voir la figure 2). L'oscillation de cette deuxième micropoutrelle 25 fait donc varier la capacité du condensateur 42. Et, inversement, l'application d'une tension électrique entre les électrodes du condensateur permet d'exercer une force sur cette micropoutrelle.

Par ailleurs, les première et deuxième micropoutrelles 22 et 25 sont couplées mécaniquement l'une à l'autre, en l'occurrence parce qu'elles se raccordent l'une à l'autre par leurs extrémités respectives. Ainsi, une flexion de l'une de ces micropoutrelles entraine une flexion de l'autre de ces micropoutrelles, comme pour deux branches d'un diapason (si ce n'est que les micropoutrelles sont ici maintenues chacune à leurs deux extrémités). Ici, le résonateur micromécanique possède plus précisément un mode d'oscillation symétrique, pour lequel un centre de masse des deux micropoutrelles 22, 25 reste immobile, ou tout au moins sensiblement immobile lors de l'oscillation des micropoutrelles. Et comme la première micropoutrelle 22 est couplée au résonateur optique 3 tandis que la deuxième micropoutrelle 25 est couplée au résonateur électrique 40, on obtient finalement un couplage de type électro-optique entre le résonateur électrique 40 et le résonateur optique à double cavité 3.

Le système 1 de conversion électro-optique est réalisé ici sur un substrat 4 comportant au moins trois couches : une couche principale 5 qui sert de support, une couche supérieure 7, dans laquelle sont gravées la cavité en anneau 10 et les micropoutrelles 22, 25, et une couche d'espacement 6, qui s'étend entre la couche principale 5 et la couche supérieure 7. La couche supérieure 7 est réalisée dans un matériau transparent pour les longueurs d'onde du domaine optique destinées à résonner dans le résonateur optique 3.

Ici, le substrat 4 est un substrat de type SOI (i.e. : Silicium sur Isolant), pour lequel la couche principale 5 est en silicium Si, la couche d'espacement 6 est en oxyde de silicium SiO₂, et pour lequel la couche supérieure 7 est également en silicium Si (cette couche est habituellement appelée couche « Si top » dans ce domaine technique). On pourra noter que la couche supérieure 7 peut être amincie par endroit, et n'a pas nécessairement une épaisseur constante sur l'ensemble de la surface occupée par le système 1.

Le dispositif de conversion optomécanique 2 en lui-même, qui comprend le résonateur optique 3 composite et le résonateur micromécanique 30, est maintenant décrit plus en détail. Le circuit électrique résonant 40 est décrit ensuite.

Comme déjà indiqué, ce résonateur optique 3 comprend la cavité en anneau 10 et intègre un élément fermeture éclair 20 dont l'un des bras est réalisé sur une portion de la cavité en anneau 10.

La cavité en anneau 10 est gravée dans la couche supérieure 7 du substrat. Elle comprend un guide d'onde optique qui s'étend le long d'une courbe fermée formant un anneau, et le long duquel est guidée la lumière confinée dans la cavité. En l'occurrence, ce guide d'onde a une section rectangulaire. Les flancs du guide, qui le délimite latéralement sont obtenus en gravant la couche supérieure 7 (ces flancs sont perpendiculaires à cette couche). Au niveau de la cavité en anneau 10 (plus précisément, sous le guide d'onde), la couche d'espacement 6 a été retirée, si bien que la partie restante de la couche supérieure, qui forme le guide d'onde, est suspendue. Cela permet d'obtenir un contraste d'indice élevé entre le guide lui-même et l'espace qui l'entoure. On notera que la largeur du guide d'onde peut varier le long de cette cavité, en particulier pour obtenir une bonne adaptation du mode optique de part et d'autre de la structure en fermeture éclair (entre la partie en fermeture éclair d'une part, et le reste de du guide d'onde annulaire d'autre part).

La cavité en anneau 10 comporte ici, successivement : une première portion 14, ici rectiligne, puis un premier virage 12, par exemple hémicirculaire, puis une deuxième portion 15, ici rectiligne, et enfin un deuxième virage 13, par exemple hémicirculaire lui aussi, qui vient fermer cette boucle en se raccordant à la première portion 14.

Un couplage optique entre la cavité en anneau 10 et une ligne de transmission optique 51 est réalisée le long de la portion 14. Sur le plan optique, sert la ligne de transmission optique 51 de voie d'entrée et de sortie au système de conversion. Le long de la portion 14, un écart e3 faible sépare le guide d'onde de la cavité d'une part, et la ligne de transmission optique 51 d'autre part, et cela sur une sur une longueur d'interaction importante, favorisant ainsi un couplage efficace par ondes évanescentes. Cette ligne de transmission 51 est formée par un autre guide d'onde optique, gravé lui aussi dans la couche supérieure 7 du substrat. Tels que représentés sur la figure 2, la portion 14 et le la ligne de transmission 51 sont toutes deux rectilignes. En variante, elles pourraient néanmoins être courbes toutes deux (la portion 14 et la ligne de transmission s'étendant néanmoins parallèlement l'une à l'autre, même si elles sont courbes, pour permettre le couplage par ondes évanescentes mentionné plus haut).

Comme déjà indiqué, la portion 15 est ici rectiligne. En variante, elle pourrait toutefois être courbe (la micropoutrelle 22 suivant alors elle aussi une ligne courbe, de manière à épouser la portion 15, à faible distance de celle-ci).

La cavité en anneau 10, qui est suspendue, est maintenue au-dessus de la couche principale 5 du substrat par un système de support 19 qui relie cette couche principale au guide d'onde en anneau. Ce système de support 19 comprend ici :
- un ilot 18, obtenu en gravant la couche supérieure 7 et la couche d'espacement 6, la couche d'espacement étant conservée en partie sous l'ilot 18 (ou étant remplacée, au moins en partie, par des inclusions de silicium polycristallin introduites grâce à des trous réalisés dans les couches 6 et 7, au niveau de l'ilot, ce qui permet d'obtenir une taille d'ancrage de l'ilot 18 indépendante de l'étape de gravure de la couche 6), si bien que cet ilot 18 repose sur la couche principale 5 dont il est solidaire, et
- des armatures de maintien 17, ici au nombre de quatre, qui raccordent l'ilot 18 au guide d'onde en anneau, et qui sont gravées dans la couche supérieure 7 (la couche d'espacement 6 étant retirée, sous ces armatures).

La largeur du guide d'onde en anneau peut être augmentée localement à la jonction entre le guide et les armatures en question, de manière à éloigner le mode de propagation de ces armatures, afin d'augmenter le facteur de qualité du résonateur 3. Quant aux armatures 17, elles pourraient au contraire être moins larges à leur extrémité, là où elles se raccordent au guide d'onde, pour perturber le moins possible la propagation dans celui-ci.

L'ilot 18 est situé ici au centre de l'anneau que forme la cavité 10.

En termes de dimensions, la cavité en anneau 10 a par exemple un périmètre compris entre 3 et 300 microns, voire entre 50 et 150 microns. Sa section, rectangulaire, a par exemple une hauteur et une largeur comprises chacune entre 0,1 et 2 microns (voire entre 0,1 et 0,5 micron pour la hauteur). Ici, cette hauteur (qui correspond par exemple à l'épaisseur initiale de la couche supérieure 7, avant gravure) est comprise plus précisément entre 150 et 250 nm, tandis que cette largeur (largeur du guide d'onde en anneau) est comprise entre 100 et 200 nm.

Comme déjà indiqué, le premier bras 21 de l'élément fermeture éclair 20 est réalisé le long de la portion 15 de la cavité en anneau, tandis que son deuxième bras 22 est réalisé sur la première micropoutrelle 22 du résonateur micromécanique 30.

Chaque bras 21, 22 comporte ici des motifs 23, 24 répétés périodiquement le long de ce bras, avec un pas P (pas qui peut varier de manière régulière depuis les extrémités vers le centre du bras ; le pas P peut avoir une valeur proche de la longueur d'onde de travail prévue pour le dispositif, ou être inférieur à celle-ci). En l'occurrence, ces motifs sont obtenus :
- en gravant des rainures sur le flanc de la micropoutrelle 22 qui est situé en vis-à-vis de la cavité en anneau, et
- en gravant des rainures sur le flanc du guide d'onde en anneau qui est situé en vis-à-vis de la micropoutrelle 22.

C'est donc sur ces deux flancs, situés en vis-à-vis l'un de l'autre, que sont formés les motifs 23, 24 répétés périodiquement.

Les motifs 23 présents sur le premier bras 21, et ceux, 24, présents sur le deuxième bras 22 sont de même forme, sont répétés avec le même pas P, et sont situés en face les uns des autres (c'est-à-dire que chaque motif 24 est situé au droit de l'un des motifs 23, en coïncidence avec celui-ci). Sur chaque bras, le nombre total de motifs est par exemple compris entre 10 et 100.

Les rainures réalisées sur les flancs du guide d'onde et de la micropoutrelle en question sont ici des rainures qui s'étendent verticalement, c'est-à-dire selon un axe perpendiculaire au plan du substrat 4. Elles s'étendent chacune verticalement sur tout l'épaisseur de la micropoutrelle, ou, respectivement, sur toute l'épaisseur du guide d'onde en anneau. Elles sont répétées périodiquement, en étant séparées deux à deux par le pas P. En l'occurrence, il s'agit de rainures de section trapézoïdale, à fond plat.

Sur le flanc de la micropoutrelle 22, chaque motif 24 comporte une facette plane 29, en saillie par rapport au reste de la micropoutrelle, les différentes facettes 29 étant séparées deux à deux par les rainures en question et étant situées dans un même plan.

De même, sur le flan du guide d'onde en anneau, chaque motif 23 comporte une facette plane 28, en saillie par rapport au reste du guide d'onde, les différentes facettes 28 étant séparées deux à deux par les rainures en question et étant situées dans un même plan, parallèle au plan des facettes 29 de la micropoutrelle 22 (tout au moins lorsque cette micropoutrelle est au repos, non déformée).

Cette configuration, dans laquelle les deux bras 21, 22 présentent chacun des facettes 28, 29 planes (et coplanaires) permet d'obtenir un écartement très faible entre les deux bras 21, 22 de l'élément fermeture éclair, et cela sur une surface assez étendue, ce qui favorise un fort confinement du champ électrique et permet donc d'obtenir un coefficient de couplage opto-mécanique élevé.

En l'occurrence, un écart e1, qui, au niveau desdites facettes planes 28 et 29, sépare la micropoutrelle 22 de la portion 15 du guide d'onde en anneau, est ici inférieur à 0,1 micron. En d'autres termes, pour chaque facette 28, l'écart e1 entre cette facette et la facette 29 située en face, sur l'autre bras l'élément fermeture éclair, est inférieur à 0,1 micron. A titre d'exemple, cet écart peut être compris entre 20 et 80 nm.

L'écart e1 en question correspond à l'écart entre les facettes 28 et 29 lorsque la micropoutrelle 22 est au repos (non fléchie).

Lorsque cette micropoutrelle oscille, cet écart varie au cours du temps, et d'une manière qui dépend de la position considérée le long de la micropoutrelle. Comme mentionné plus haut, c'est la variation de cet écart qui permet de coupler le champ électrique confiné dans le résonateur optique 3 aux oscillations de la micropoutrelle. On notera que la portion 15 est susceptible de vibrer en flexion elle aussi (sous l'effet d'une pression de radiation), ici.

Cet élément fermeture éclair 20, avec sa double ligne de facettes planes 28, 29 presque en contact les unes avec les autres, permet un confinement extrêmement fort (extrêmement localisé) du champ électrique. En pratique, il s'agit d'un mode électromagnétique de type quasi TE : on profite des fortes discontinuités de champ électrique pour la composante normale aux surfaces (facettes 28, 29) délimitant les petits espaces. Cela permet de localiser le mode dans cet espacement. Ainsi, au niveau de chaque couple de motifs 23, 24, le champ électrique est confiné presque entièrement dans la zone très mince située entre les deux facettes 28 et 29 (donc sur l'épaisseur e1 en question). Ce confinement très fort du champ électrique est favorable en termes de couplage opto-mécanique (notamment parce que l'intensité lumineuse localement très élevée permettra d'obtenir une pression de radiation importante sur la poutrelle, et donc une conversion de grandeurs optiques vers des grandeurs mécaniques efficace).

D'un point de vue longitudinal, le dispositif 2 peut être configuré de manière à ce que, le long de la cavité en anneau 10, le champ électrique présente des valeurs maximales au niveau de l'élément fermeture éclair 20, et même au niveau du milieu de l'élément fermeture éclair (par exemple sur 5 ou 6 motifs situés au milieu de l'élément, si chaque bras comporte 20 à 30 motifs, par exemple). En d'autres termes, le dispositif peut être configuré de manière à ce que, dans la cavité en anneau 10, le champ électrique soit confiné principalement au niveau de l'élément fermeture éclair (et, dans cet élément, entre les facettes planes mentionnées plus haut, par exemple).

D'un point de vue longitudinal, le dispositif 2 pourrait au contraire être configuré de manière à ce que la distribution d'énergie électromagnétique soit homogène le long de l'anneau, l'intégrale de la densité d'énergie sur une section donnée de la cavité en anneau 10 étant sensiblement la même tout au long de la cavité en anneau 10, et, en particulier, soit au moins approximativement la même dans la partie fermeture éclair et dans le reste de la cavité. Dans ce cas, et pour l'exemple d'élément fermeture éclair de la figure 2, dans la partie fermeture éclair, la densité d'énergie serait concentrée dans la partie « vide », entre les facettes 28, 29 (i.e. : dans la fente qui sépare les deux bras), comme expliqué ci-dessus.

Le dispositif optomécanique 2 est configuré pour fonctionner à la longueur d'onde de travail λ_{ο} mentionnée plus haut, c'est-à-dire pour recevoir et pour transmettre ou émettre de la lumière à cette longueur d'onde. En l'occurrence, la longueur d'onde de travail λ_{ο} est l'une des longueurs d'onde de résonance de résonateur optique composite 3.

La longueur d'onde de travail λ_{ο} peut être comprise entre 0,4 et 2 microns (dans le vide). Ici, elle est égale plus précisément à 1,5 micron et est donc bien adaptée à une transmission sur de grandes distances par fibre optique (bande des télécoms optiques). La fréquence correspondante est de 203,6 THz.

Les simulations numériques mentionnées plus haut prévoient, pour ce dispositif de conversion opto-mécanique 2, un taux de couplage optomécanique g_{IR} supérieur à 10 MHz (taux de transfert d'une variable donnée, depuis une grandeur mécanique, vers une grandeur optique), ce qui correspond donc à un couplage opto-mécanique très efficace. Quant au facteur de qualité intrinsèque Q, on s'attend, pour le résonateur optique composite 3, à une valeur supérieure à 10⁶.

Comme mentionné plus haut, le dispositif de conversion opto-mécanique 2 est couplé à la ligne de transmission optique 51, qui, du point de vue optique, sert de ligne d'entrée et de sortie au dispositif. Le guide d'onde optique qui forme cette ligne de transmission passe à proximité de la cavité en anneau 10, le long de sa première portion rectiligne 14. Ce guide est pourvu ici :
- d'un premier réseau de couplage 52, réalisé à l'une des deux extrémités du guide, et sert par exemple de voie d'entrée,
- et d'un deuxième réseau de couplage 53, réalisé à l'autre extrémité du guide, et qui sert par exemple de voie de sortie.

Ces réseaux, texturés périodiquement qui ont une section qui s'évase progressivement, permettent de coupler la lumière circulant dans le guide 51 à un mode de propagation libre correspondant à une direction de propagation hors-plan. Le faisceau lumineux émis par le réseau 52, 53 considéré est alors collecté par un système optique non représenté. Inversement, un faisceau lumineux incident, délivré par un tel système optique de collection, est couplé dans le guide 51 par le réseau 52 ou 53.

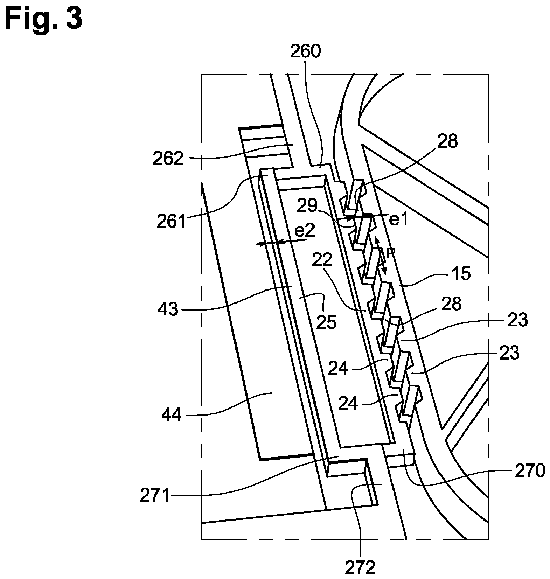

Comme indiqué plus haut, le résonateur mécanique 30 (figures 2 et 3) comprend les première et deuxième micropoutrelles 22 et 25, qui se raccordent l'une à l'autre à leurs extrémités respectives 260, 270, et 260', 270'.

Ce résonateur prend ici la forme d'un cadre rectangulaire gravé dans la couche supérieure 7 du substrat 4, et sous lequel la couche d'espacement 6 a été retirée pour que le résonateur soit suspendu.

Ici, au niveau du résonateur mécanique 30, et aussi d'ailleurs au niveau du résonateur électrique 40, la couche supérieure 7 a été amincie, par rapport à son épaisseur initiale. Une fois le système 1 fabriqué, cette couche est moins épaisse (environ deux fois moins épaisse) au niveau du résonateur mécanique 30 qu'au niveau du guide d'onde en anneau de la cavité en anneau 10. Amincir ainsi la couche supérieure au niveau du résonateur mécanique 30 permet de réduire la masse des poutrelles 22, 25 (plus précisément, la masse effective du mode de vibration considéré). A titre d'exemple, la couche supérieure 7 peut avoir une épaisseur de 100 nm dans la zone où est réalisé le résonateur mécanique, et une épaisseur de 200 ou 220 nm dans la zone où est réalisée la cavité en anneau 10.

La partie de la couche 7 dans la laquelle est formé le résonateur mécanique 30, et sur laquelle est réalisé le résonateur électrique 40, forme une membrane dont une partie est gravée pour réaliser le résonateur mécanique 30, et qui comporte une partie principale 70, fixe, dans laquelle est réalisée le résonateur électrique 40. Cette membrane est en partie suspendue : elle est suspendue sous le résonateur mécanique 30, et peut être suspendue ailleurs aussi (en retirant pour cela la couche d'espacement 6 dans les zones où l'on souhaite que la membrane soit suspendue, par attaque chimique à l'acide fluorhydrique HF). La membrane en question peut par exemple être suspendue sur la majorité de la zone occupée par le résonateur électrique 40, pour limiter les pertes par conduction électrique à l'interface entre la couche en silice 6 et la couche principale 5 en silicium.

Quoiqu'il en soit, les deux micropoutrelles 22, 25 du résonateur mécanique 30 sont constituées ici par les deux branches longues du cadre rectangulaire gravé dans cette membrane (i.e. : par les deux côtés les plus longs du rectangle), et elles sont reliées l'une à l'autre par les deux côtés courts du rectangle. Chaque côté court est relié à la partie principale 70, fixe, de la membrane par un pont 262, 272.

Chaque micropoutrelle 22, 25 s'étend ainsi d'une première extrémité 260, 261 à une deuxième extrémité 270, 271, ses deux extrémités 260 et 270, ou 261 et 271, étant fixes, ou quasiment fixes. La micropoutrelle 22, 25 oscille alors en se déformant en flexion entre ces deux extrémité fixes (géométrie de type « double clamp »). Cette oscillation a lieu principalement parallèlement au plan du substrat 4. En d'autres termes, pour chaque portion de la poutrelle, le déplacement par rapport à sa position de repos est un vecteur contenu dans le plan de la membrane. Les extrémités des deux micropoutrelles 22, 25 sont fixes, ou quasiment fixes, mais elles permettent néanmoins de transmettre un couple (de flexion) d'une micropoutrelle à l'autre, et ainsi de les coupler mécaniquement., comme expliqué en préambule. Le mode de vibration considéré ici, qui est le mode qui se couple préférentiellement au résonateur optique 3 et au résonateur électrique 40, est le mode de vibration symétrique, équilibré, mentionné plus haut, dans lequel le centre de masse des deux micropoutrelles reste immobile. En l'occurrence, les deux micropoutrelles vibrent ici de manière symétrique (soit en s'éloignant simultanément l'une de l'autre, soit en se rapprochant simultanément l'une de l'autre). Pour que le résonateur possède ce mode symétrique, équilibré, les deux micropoutrelles 22 et 25 sont ici symétriques l'une de l'autre (ou quasiment symétriques) par rapport à un plan médian. En variante, ces deux micropoutrelles pourraient néanmoins avoir des caractéristiques géométriques différentes l'une de l'autre, pour autant que leur centre de masse reste immobile lors de leur oscillation. Cette disposition est intéressante en pratique car un tel mode symétrique (plus précisément, équilibré) est peu couplé au bruit acoustique (vibrations mécaniques) présent éventuellement dans le système.

Par ailleurs, cette configuration dans laquelle : la première micropoutrelle 22 est couplée au résonateur optique, tandis que la deuxième micropoutrelle 25 est couplée au résonateur électrique 40, ces deux micropoutrelles étant par ailleurs couplées l'une à l'autre mécaniquement, permet d'éviter de déposer une électrode conductrice sur la première micropoutrelle 22 (voir les figures 2 et 3), ce qui permet de ne pas modifier les propriétés du résonateur optique 3, et évite en particulier les pertes optiques que pourrait causer une telle électrode.

D'ailleurs, comme on peut le voir sur les figures 2 et 3, la face supérieure de la deuxième micropoutrelle 25 est recouverte au moins en partie, ici en totalité par une première électrode 43, formée d'un matériau électriquement conducteur, tandis que la face supérieure de la première micropoutrelle 22 est essentiellement, ici totalement dépourvue d'une telle électrode. Outre son intérêt sur le plan optique, limiter ainsi la quantité de matériau conducteur déposé sur résonateur mécanique permet de réduire la masse effective du résonateur, pour le mode considéré. Cela permet aussi de limiter les pertes mécaniques dans le résonateur (qui peuvent être liées à de légers effets de déformation plastique dans la ou les électrodes). Par ailleurs, le fait de ne recouvrir que l'une des deux micropoutrelles ne déséquilibre que très légèrement le mode symétrique mentionné plus haut (et ce déséquilibre pourrait d'ailleurs être compensé par une largeur légèrement plus grande pour la première micropoutrelle que pour la deuxième et/ou par des raideurs légèrement différentes).

Une deuxième électrode 44 fixe, située en vis-à-vis de la première électrode 43, sur la partie principale 70 (fixe) de la membrane, forme, avec la première électrode 43, le condensateur électrique 42 mentionné plus haut. Les bords respectifs de ces deux électrodes 43, 44, situés en vis-à-vis l'un de l'autre, sont très proches l'un de l'autre. En effet, la deuxième micropoutrelle 25 est séparée de la partie principale 70 de la membrane par une fente très mince, dont la largeur est par exemple inférieure à 0,1 micron. A titre d'exemple, cette largeur e2 (qui correspond au gap moyen du condensateur 42) peut être de 50 ou 60 nm.

En termes de dimensions, chaque micropoutrelle 22, 25 a par exemple une épaisseur comprise entre 0,1 et 0,3 micron, une largeur comprise entre 0,1 et 0,5 micron et une longueur comprise entre 3 et 30 microns. La fréquence d'oscillation du mode symétrique mentionné plus haut est typiquement supérieure à 1 MHz. Elle est par exemple comprise entre 1 et 100 Mégahertz, voire entre 1 et 600 Mégahertz.

S'agissant maintenant du résonateur électrique 40, il comprend, comme déjà indiqué, le condensateur 42, et l'inductance 41, connectée entre la première 43 et la deuxième électrode 44 du condensateur. L'ordre de grandeur de la capacité du condensateur est le femtofarad, celui de l'inductance est la centaine de nanohenry, et la fréquence de résonance du circuit est de l'ordre du gigahertz ou plus. Elle est par exemple comprise entre 1 et 30 Gigahertz.

L'inductance est réalisée sur la surface supérieure de la partie principale 70 de la membrane, sous la forme d'une piste formant une ou plusieurs boucles.

Une ligne de transmission électrique 47, qui est ici une piste électrique réalisée elle aussi sur la surface supérieure de cette membrane, s'étend le long d'une portion de la piste qui forme l'inductance 41. Cette ligne de transmission sert de voie d'entrée et/ou de sortie électrique (microonde) pour le système 1 de conversion.

De manière remarquable, la piste qui forme l'inductance 41 est une piste électrique de très faible épaisseur ep réalisée dans un matériau supraconducteur choisi de sorte à obtenir une piste électrique à forte inductance cinétique Lc.

Cela permet d'augmenter l'inductance par unité de longueur de la piste en question. En effet, son inductance totale Lₜₒₜ est la somme de son inductance magnétique classique Lₘ (due à la création d'un champ magnétique - à l'extérieur de la piste - par le courant qui circule dans la piste) et de son inductance cinétique Lc. L'inductance cinétique est généralement faible devant l'inductance magnétique, et n'est souvent pas prise en compte. Mais ici, la piste est configurée de manière à obtenir une inductance cinétique élevée, par exemple supérieure, voire même 3 fois supérieure à son inductance magnétique Lₘ.

Comme l'inductance totale par unité de longueur de piste est ainsi augmentée, on peut en contrepartie réduire la longueur de cette piste. En particulier, on peut obtenir une inductance totale ayant la valeur souhaitée sans avoir à réaliser une piste en spirale comportant de nombreuses spires, comme celle du système de conversion décrit dans l'article de G. Arnold et al. mentionné plus haut, dans la partie concernant l'arrière-plan technologique. Ainsi, à titre d'exemple, telle que représentée sur la figure 2, la piste en question forme une seule spire, en l'occurrence rectangulaire.

Pouvoir s'affranchir d'une géométrie en spirale est particulièrement intéressant. En effet, cela permet de réduire la capacité parasite de l'inductance (dans le cas d'un enroulement en spirale, l'influence électrostatique entre deux spires successives est à l'origine d'une valeur élevée de capacité parasite). Et il est souhaitable de réduire cette capacité parasite, qui est constante, pour que les variations de capacité dues au mouvement de micropoutrelle 25 ne se trouvent pas noyées dans une capacité totale essentiellement constante.

En pratique, des mesures préliminaires sur de tels résonateurs électriques à forte inductance cinétique, et à une seule boucle, ont permis de montrer que des valeurs d'inductance de 200 nH environ, accompagnées de capacités parasites de l'ordre de 1, voire de 0,5 fF pouvait être obtenues, ce qui est bien meilleur que dans l'article mentionné plus haut, dans lequel, pour une inductance (essentiellement magnétique) de 60nH environ, la capacité parasite de l'inductance est de 3 femtofarad environ.

Par ailleurs, s'affranchir d'une piste en spirale permet de simplifier nettement la fabrication du dispositif, en réduisant le nombre de niveaux de lithographie à réaliser (puisqu'il n'est pas nécessaire de réaliser un pont enjambant les spires, du centre vers l'extérieur de la spirale).

L'inductance cinétique Le en question pourra par exemple être définie comme l'inductance totale Ltot de la piste électrique moins son inductance magnétique Lm. La valeur de l'inductance cinétique peut donc être facilement déterminée par une mesure de l'inductance totale et un calcul (par exemple par éléments finis) de l'inductance magnétique, cette dernière étant entièrement déterminée par la géométrie de la piste électrique. Elle peut aussi être déterminée en comparant l'inductance de la piste mesurée à une température supérieure, puis à une température inférieure à une température critique du matériau supraconducteur formant la piste (température critique au-delà de laquelle le matériau n'est plus supraconducteur).

Par forte inductance cinétique, on entend par exemple une inductance cinétique supérieure à 3 fois l'inductance magnétique de la piste. La piste en question peut par exemple avoir une inductance cinétique par carré supérieure ou égale à 20 picohenry par carré, voire supérieure ou égale 50 picohenry (pH) par carré. Par inductance cinétique par carré, on entend l'inductance cinétique d'un tronçon de piste de forme carré (vu dessus). Ainsi, à titre d'exemple, une portion de piste dont la longueur est égale à 100 fois sa largeur aura une inductance cinétique égale à (ou tout au moins proche de) 100 fois son inductance cinétique par carré. A titre indicatif, pour une piste ayant une largeur comprise entre 50 et 500 nanomètres, l'inductance cinétique de la piste en question, par unité de longueur, peut être supérieure à 0,1nH/µm, voire supérieure à 0,3 nH/µm ou même supérieure à 1nH/µm.

Pour obtenir de telles valeurs, l'épaisseur ep de la piste est choisie particulièrement petite, par exemple inférieure à la longueur d'onde de London dans le matériau supraconducteur qui forme la piste. En pratique, l'épaisseur ep de la piste est inférieure à 20 ou même à 10 nm. Ici par exemple, elle est comprise entre 3 et 10 nm.

Ici, la piste en question, ainsi que les première et deuxième électrodes du condensateur 42, sont en nitrure de Titane TiN. Ce matériau a l'avantage de pouvoir être déposé en couche très mince (par exemple 10 nm d'épaisseur) avec une bonne homogénéité (alors que des couches homogènes en Aluminium sont difficilement réalisable en dessous de 30nm d'épaisseur, par exemple), et de résister aux attaques chimiques à l'acide fluorhydrique nécessaires à l'obtention du résonateur micromécanique.

En plus de garantir une inductance cinétique élevée, réaliser ainsi une piste très peu épaisse permet d'assurer de bonnes propriétés mécaniques à l'oscillateur, la masse ajoutée par l'électrode au niveau de la micropoutrelle étant réduite au strict minimum (et les phénomènes dissipatifs qui peuvent se produire lors de la déformation du matériau conducteur sont minimisés eux aussi).

D'autres matériaux supraconducteurs que le TiN, tels que du nitrure de niobium NbN ou un matériau supraconducteur granulaire, seraient néanmoins envisageables pour réaliser cette piste. Par matériau supraconducteur granulaire on entend par exemple un matériau formé de grains en matériau supraconducteur pur, ayant chacun une dimension typique (par exemple un diamètre) inférieur à 10 nm. Les grains en question peuvent en particulier être séparés les uns des autres par de minces couches d'un oxyde isolant (par exemple AlOx si le matériau est de l'Aluminium granulaire).

Le système 1 qui vient d'être décrit peut être fabriqué grâce à un procédé de fabrication qui comprend principalement les étapes suivantes :
- amincissement optionnel d'une partie de la couche supérieure 7 du substrat 4, puis
- dépôt pleine plaque d'une couche du matériau supraconducteur destiné à former la piste électrique de l'inductance 41, puis
- lithographie, et gravure, de la couche supérieure 7 et de la couche de matériau supraconducteur qui la recouvre, selon un même motif définissant le résonateur mécanique 30, la cavité en anneau 10 et la ligne de transmission optique 51, et qui définit aussi des ouvertures annexes traversant la couche supérieure 7 pour le dégagement ultérieur de la couche d'espacement 6 par attaque chimique, puis
- lithographie et gravure de la couche en matériau supraconducteur selon un motif définissant un motif la piste électrique qui forme l'inductance 41 et qui définit aussi les première et deuxième électrodes 43, 44 du condensateur 42 ainsi que la ligne de transmission électrique 47, puis
- gravure de la couche d'espacement 6 par attaque chimique, notamment pour libérer le résonateur mécanique 30.

Pour obtenir des flancs très lisses pour le guide d'onde qui forme la cavité en anneau, afin d'augmenter son facteur de qualité, on peut prévoir, après l'étape de lithographie de la couche de résine au cours de laquelle on définit le motif de la cavité, une sous-étape de chauffage, au cours de laquelle une augmentation de température de la couche de résine permet, par fluage, de rendre ses flancs plus lisses, sans aspérité, ce qui permet ensuite une gravure plus régulière des flancs du guide d'onde. Des plasmas de O2, H2, He peuvent aussi être employés après gravure pour lisser les surfaces du guide d'onde.

Différentes variantes peuvent être apportées au système qui vient d'être décrit, en plus de celles mentionnées plus haut.

Ainsi, pour ce qui est de l'élément fermeture éclair par exemple, on pourrait avoir des motifs en créneaux sur un seul des deux bras de la cavité, l'autre bras étant plat, lisse, sans motifs (on remarquera que le confinement latéral entre facettes planes serait obtenu aussi dans cette configuration). Par ailleurs, les rainures pratiquées sur les flancs de ces bras pourraient avoir un profil différent de celui (en trapèze) décrit plus haut, par exemple un profil hémicirculaire, ou en triangle. D'ailleurs, dans certaines configurations, les deux bras pourraient éventuellement être lisses tous les deux.

Plus généralement, des motifs d'un autre type, tels que des trous traversant pratiqués dans la micropoutrelle et/ou dans le guide d'onde, pourraient être employés. On pourrait aussi réaliser de tels trous, en compléments des rainures réalisées sur les flancs des bras de l'élément fermeture éclair, pour obtenir une adaptation de mode lors du passage de la zone en fermeture éclair au circuit photonique de forme annulaire.

Concernant le résonateur mécanique, il pourrait comprendre une seule micropoutrelle, au lieu de deux. Les micropoutrelles pourraient avoir chacune une extrémité libre, au lieu d'être fixées à leurs deux extrémités.

Concernant l'inductance, au lieu de comprendre une seule spire rectangulaire, elle pourrait comprendre une spire d'une autre forme, par exemple circulaire, ou avec des portions en méandres ou en zig-zag. Elle pourrait aussi comprendre quelques spires au lieu d'une seule. Néanmoins, de préférence, sur la majeure partie de sa longueur, voire sur toute sa longueur, la piste qui forme l'inductance ne comprendra pas de parties s'étendant en vis-à-vis l'une de l'autre et séparées par un écart inférieur à cinq fois, ou même dix fois la largeur de la piste électrique (à l'exception des parties formant les électrodes du condensateur), afin de limiter la capacité parasite de la piste.

## Revendications

1. Système (1) de conversion électro-optique comprenant :
- un dispositif (2) de conversion opto-mécanique comportant :
∘ une cavité en anneau (10) formée d'un guide d'onde optique qui s'étend le long d'une courbe fermée annulaire,
∘ un résonateur micromécanique (30) qui comprend au moins une micropoutrelle (22), et
∘ un élément de type « fermeture-éclair » (20) intégré à la cavité en anneau, cet élément comportant un premier bras (21) et un deuxième bras (22) qui s'étendent parallèlement l'un à l'autre, en vis-à-vis l'un de l'autre, le premier bras (21) étant réalisé sur une portion (15) du guide d'onde en anneau tandis que le deuxième bras est réalisé sur la micropoutrelle (22), la micropoutrelle et ladite portion de guide (15) étant séparées latéralement l'une de l'autre par un écart qui varie au moins localement lorsque la micropoutrelle (22) oscille, et comprenant
- un condensateur (42) électrique qui comporte une première électrode (43) et une deuxième électrode (44), la première électrode (43) se déplaçant par rapport à la deuxième électrode (44) lors d'une oscillation de ladite micropoutrelle (22).

2. Système (1) selon la revendication 1 dans lequel l'un au moins des premier et deuxième bras (21, 22) présente une ligne de motifs (23, 24) répétés périodiquement ou semi-périodiquement le long de ce bras.

3. Système (1) selon la revendication 2, dans lequel des rainures sont réparties périodiquement ou semi-périodiquement sur un flanc de ladite micropoutrelle (22) situé en vis-à-vis d'un flanc de ladite portion (15) de guide d'onde, ou dans lequel des rainures sont réparties périodiquement ou semi-périodiquement sur un flanc de ladite portion (15) de guide d'onde située en vis-vis d'un flanc de ladite micropoutrelle (22).

4. Système (1) selon la revendication 3, dans lequel lesdits motifs comprennent des facettes planes (28, 29) faisant saillie, situées sur le flanc de ladite micropoutrelle (22) ou sur le flanc de ladite portion (15) de guide d'onde, séparées deux à deux par lesdites rainures.

5. Système (1) selon la revendication 4, dans lequel un écart (e1), qui sépare ladite portion (15) du guide d'onde de ladite micropoutrelle (22) au niveau desdites facettes planes (28, 29), est inférieur à 0,1 micron.

6. Système (1) selon la revendication 2 dans lequel la micropoutrelle (22) comprend un flanc situé en vis-à-vis d'un flanc de ladite portion (15) de guide d'onde, et dans lequel lesdits motifs sont des motifs internes au bras considéré, qui ne sont situés ni sur le flanc de la micropoutrelle (22) ni sur le flanc de ladite portion (15) de guide d'onde.

7. Système (1) selon l'une des revendications 2 à 6, dans lequel ladite ligne de motifs répétés périodiquement ou semi-périodiquement est située sur le premier bras (21) d'élément de type fermeture éclair (20), et dans lequel une autre ligne de motifs répétés périodiquement ou semi-périodiquement est présente aussi sur le deuxième bras (22) de l'élément de type fermeture éclair.

8. Système (1) selon l'une des revendications 1 à 7, dans lequel la micropoutrelle (22) s'étend d'une première extrémité (260) à une deuxième extrémité (261) de la micropoutrelle, et est maintenue fixe à ces deux extrémités.

9. Système (1) selon l'une des revendication 1 à 8, dans lequel la cavité en anneau (10) et la micropoutrelle (22) sont gravées dans une couche supérieure (7) en Silicium d'un substrat (4) de type Silicium sur Isolant.

10. Système (1) selon l'une des revendications 1 à 9, dans lequel le résonateur micromécanique (30) comprend une micropoutrelle supplémentaire (25), ladite micropoutrelle (22) et ladite micropoutrelle supplémentaire (25) se raccordant l'une à l'autre par l'une au moins de leurs extrémités respectives (260, 261, 270, 271), le résonateur micromécanique (30) ayant un mode d'oscillation symétrique pour lequel un centre de masse de l'ensemble comprenant la micropoutrelle (22) et la micropoutrelle supplémentaire (25) reste immobile.

11. Système (1) selon la revendication 10, dans lequel :
- la micropoutrelle (22) et la micropoutrelle supplémentaire (25) sont gravées dans une membrane (7), formée d'un premier matériau,
- la micropoutrelle supplémentaire (25) est séparée d'une partie principale (70), fixe, de ladite membrane par une fente étroite qui s'étend parallèlement à ladite micropoutrelle supplémentaire (25),
- une partie au moins d'une face supérieure de la micropoutrelle supplémentaire (25) est recouverte par ladite première électrode (43), formée d'un deuxième matériau, électriquement conducteur,
- ladite deuxième électrode (44) s'étend côte à côte de la première électrode (43), parallèlement à la première électrode, et sur la partie principale (70) fixe de ladite membrane, d'un autre côté de ladite fente, et dans lequel
- ladite micropoutrelle (22) a une face supérieure qui est essentiellement dépourvue dudit deuxième matériau électriquement conducteur.

12. Système (1) selon l'une des revendications précédentes, comprenant un circuit électrique résonant (40) comportant ledit condensateur (42) électrique ainsi qu'une inductance (41).

13. Système (1) selon la revendication 12, dans lequel ladite inductance (41) comporte une piste électrique de très faible épaisseur réalisée dans un matériau supraconducteur choisi de sorte que ladite piste ait une forte inductance cinétique.

14. Système (1) selon la revendication 13, dans lequel ladite épaisseur est inférieure à 20 ou même 10 nanomètres et dans lequel le matériau supraconducteur est l'un des matériaux suivants : le nitrure de titane, le nitrure de niobium ou bien encore un matériau supraconducteur granulaire.

15. Procédé de fabrication d'un système (1) de conversion électro-optique selon une des revendications précédentes, comprenant un dispositif opto-mécanique, à partir d'un substrat comprenant une couche d'oxyde de silicium (6) et une couche de silicium (7) sur la couche d'oxyde de silicium, le procédé comprenant les étapes suivantes :
- lithographie et gravure de la couche de silicium (7), selon un motif définissant :
∘ le résonateur mécanique (30),
∘ la cavité en anneau (10) et
∘ l'élément de type « fermeture éclair » (20) puis
- gravure de la couche en oxyde de silicium (6) par attaque chimique, pour
libérer le résonateur mécanique (30) et la cavité en anneau (10), le procédé comprenant également la réalisation, sur la couche de silicium, du condensateur (42).

## Patentansprüche

1. System (1) zur elektrooptischen Umwandlung, umfassend:
- eine optomechanische Umwandlungsvorrichtung (2), die Folgendes umfasst:
∘ einen ringförmigen Hohlraum (10), der aus einem optischen Wellenleiter gebildet ist und sich entlang einer ringförmigen geschlossenen Kurve erstreckt,
∘ einen mikromechanischen Resonator (30), der mindestens einen Mikroträger (22) umfasst, und
∘ ein reißverschlussartiges Element (20), das in den ringförmigen Hohlraum integriert ist, wobei dieses Element einen ersten Arm (21) und einen zweiten Arm (22) aufweist, die sich parallel zueinander und gegenüber erstrecken, wobei der erste Arm (21) an einem Abschnitt (15) des ringförmigen Wellenleiters ausgebildet ist, während der zweite Arm am Mikroträger (22) ausgebildet ist, wobei der Mikroträger und der Abschnitt des Wellenleiters (15) seitlich voneinander durch einen Abstand getrennt sind, der sich zumindest örtlich ändert, wenn der Mikroträger (22) schwingt, und umfassend
- einen elektrischen Kondensator (42), der eine erste Elektrode (43) und eine zweite Elektrode (44) aufweist, wobei sich die erste Elektrode (43) bei einer Schwingung des Mikroträgers (22) relativ zur zweiten Elektrode (44) bewegt.

2. System (1) nach Anspruch 1, bei dem mindestens einer der ersten und zweiten Arme (21, 22) eine Reihe von Mustern (23, 24) aufweist, die sich periodisch oder halbperiodisch entlang dieses Arms wiederholen.

3. System (1) nach Anspruch 2, bei dem Nuten periodisch oder halbperiodisch auf einer Flanke des Mikroträgers (22) verteilt sind, die einer Flanke des Wellenleiterabschnitts (15) gegenüberliegt, oder bei dem Nuten periodisch oder halbperiodisch auf einer Flanke des Wellenleiterabschnitts (15) verteilt sind, die einer Flanke des Mikroträgers (22) gegenüberliegt.

4. System (1) nach Anspruch 3, bei dem die Muster vorstehende ebene Facetten (28, 29) umfassen, die sich an der Flanke des Mikroträgers (22) oder an der Flanke des Wellenleiterabschnitts (15) befinden und paarweise durch die Nuten voneinander getrennt sind.

5. System (1) nach Anspruch 4, bei dem ein Abstand (e1), der den Wellenleiterabschnitt (15) von dem Mikroträger (22) an den ebenen Facetten (28, 29) trennt, kleiner als 0,1 Mikron ist.

6. System (1) nach Anspruch 2, bei dem der Mikroträger (22) eine Flanke aufweist, die einer Flanke des Wellenleiterabschnitts (15) gegenüberliegt, und bei dem die Muster interne Muster des jeweiligen Arms sind, die sich weder auf der Flanke des Mikroträgers (22) noch auf der Flanke des Wellenleiterabschnitts (15) befinden.

7. System (1) nach einem der Ansprüche 2 bis 6, bei dem sich die Reihe periodisch oder halbperiodisch wiederholter Muster auf dem ersten Arm (21) des reißverschlussartigen Elements (20) befindet, und bei dem eine weitere Reihe periodisch oder halbperiodisch wiederholter Muster auch auf dem zweiten Arm (22) des reißverschlussartigen Elements vorhanden ist.

8. System (1) nach einem der Ansprüche 1 bis 7, bei dem sich der Mikroträger (22) von einem ersten Ende (260) zu einem zweiten Ende (261) des Mikroträgers erstreckt und an beiden Enden fest gehalten wird.

9. System (1) nach einem der Ansprüche 1 bis 8, bei dem der ringförmige Hohlraum (10) und der Mikroträger (22) in eine obere Siliziumschicht (7) eines Substrats (4) vom Typ Silizium auf Isolator geätzt sind.

10. System (1) nach einem der Ansprüche 1 bis 9, bei dem der mikromechanische Resonator (30) einen zusätzlichen Mikroträger (25) umfasst, wobei der Mikroträger (22) und der zusätzliche Mikroträger (25) an mindestens einem ihrer jeweiligen Enden miteinander verbunden sind (260, 261, 270, 271), wobei der mikromechanische Resonator (30) einen symmetrischen Schwingungsmodus aufweist, bei dem ein Massenmittelpunkt der Anordnung, die den Mikroträger (22) und den zusätzlichen Mikroträger (25) umfasst, unbeweglich bleibt.

11. System (1) nach Anspruch 10, bei dem:
- der Mikroträger (22) und der zusätzliche Mikroträger (25) in eine Membran (7) geätzt sind, die aus einem ersten Material gebildet ist,
- der zusätzliche Mikroträger (25) von einem festen Hauptteil (70) der Membran durch einen schmalen Schlitz getrennt ist, der sich parallel zum zusätzlichen Mikroträger (25) erstreckt,
- zumindest ein Teil einer Oberseite des zusätzlichen Mikroträgers (25) durch die erste Elektrode (43) bedeckt ist, die aus einem zweiten, elektrisch leitenden Material gebildet ist,
- die zweite Elektrode (44) sich Seite an Seite mit der ersten Elektrode (43) und parallel zur ersten Elektrode und über den festen Hauptteil (70) der Membran auf einer anderen Seite des Schlitzes erstreckt, und bei dem
- der Mikroträger (22) eine Oberseite hat, die im Wesentlichen frei von dem zweiten elektrisch leitenden Material ist.

12. System (1) nach einem der vorhergehenden Ansprüche, einen elektrischen Resonanzkreis (40) umfassend, der den elektrischen Kondensator (42) sowie eine Induktivität (41) aufweist.

13. System (1) nach Anspruch 12, bei dem die Induktivität (41) eine elektrische Spur von sehr geringer Dicke aufweist, die aus einem supraleitenden Material besteht, das so gewählt ist, dass die Spur eine hohe kinetische Induktivität hat.

14. System (1) nach Anspruch 13, bei dem die Dicke kleiner ist als 20 oder sogar 10 Nanometer und bei dem das supraleitende Material eines der folgenden Materialien ist: Titannitrid, Niobiumnitrid oder auch ein körniges supraleitendes Material.

15. Verfahren zur Herstellung eines Systems (1) zur elektrooptischen Umwandlung nach einem der vorhergehenden Ansprüche, eine optomechanische Vorrichtung ausgehend von einem Substrat mit einer Siliziumoxidschicht (6) und einer Siliziumschicht (7) auf der Siliziumoxidschicht umfassend, wobei das Verfahren folgende Schritte umfasst:
- Lithographie und Ätzen der Siliziumschicht (7) gemäß einem Muster, das definiert:
∘ den mechanischen Resonator (30)
∘ den ringförmigen Hohlraum (10)
∘ das reißverschlussartige Element (20), sowie anschließend
- Ätzen der Siliziumoxidschicht (6) durch chemisches Ätzen, um den mechanischen Resonator (30) und den ringförmigen Hohlraum (10) freizulegen,
wobei das Verfahren auch die Herstellung des Kondensators (42) auf der Siliziumschicht umfasst.

## Claims

1. An electro-optical conversion system (1) comprising:
- an opto-mechanical conversion device (2) including:
∘ a ring cavity (10) formed by an optical waveguide which extends along an annular closed curve,
∘ a micromechanical resonator (30) comprising at least one microcantilever (22), and
∘ a zipper type element (20) integrated into the ring cavity, this element including a first arm (21) and a second arm (22) which extend parallel to each other, opposite each other, the first arm (21) being made on a portion (15) of the ring waveguide while the second arm is made on the microcantilever (22), the microcantilever and said guide portion (15) being laterally separated from each other by a gap which varies at least locally when the microcantilever (22) oscillates, and comprising
- an electrical capacitor (42) that includes a first electrode (43) and a second electrode (44), the first electrode (43) moving relative to the second electrode (44) upon oscillation of said microcantilever (22).

2. The system (1) according to claim 1 wherein at least one of the first and second arms (21, 22) has a line of periodically or semi-periodically repeated patterns (23, 24) along that arm.

3. The system (1) according to claim 2, wherein grooves are periodically or semi-periodically distributed on a flank of said microcantilever (22) located opposite a flank of said waveguide portion (15), or wherein grooves are periodically or semi-periodically distributed on a flank of said waveguide portion (15) located opposite a flank of said microcantilever (22).

4. The system (1) according to claim 3, wherein said patterns comprise protruding planar facets (28, 29) located on the flank of said microcantilever (22) or on the flank of said waveguide portion (15), separated two by two by said grooves.

5. The system (1) according to claim 4, wherein a gap (e1), which separates said waveguide portion (15) from said microcantilever (22) at said planar facets (28, 29), is less than 0.1 micron.

6. The system (1) according to claim 2 wherein the microcantilever (22) comprises a flank located opposite a flank of said waveguide portion (15), and wherein said patterns are patterns internal to the arm under consideration, which are located neither on the flank of the microcantilever (22) nor on the flank of said waveguide portion (15).

7. The system (1) according to one of claims 2 to 6, wherein said line of periodically or semi-periodically repeated patterns is located on the first arm (21) of the zipper type element (20), and wherein another line of periodically or semi-periodically repeated patterns is also present on the second arm (22) of the zipper type element.

8. The system (1) according to one of claims 1 to 7, wherein the microcantilever (22) extends from a first end (260) to a second end (261) of the microcantilever, and is held fixed at both ends.

9. The system (1) of any of claims 1 to 8, wherein the ring cavity (10) and the microcantilever (22) are etched into a Silicon top layer (7) of a Silicon-on-Insulator substrate (4).

10. The system (1) according to one of claims 1 to 9, wherein the micromechanical resonator (30) comprises an additional microcantilever (25), said microcantilever (22) and said additional microcantilever (25) connecting to each other by at least one of their respective ends (260, 261, 270, 271), the micromechanical resonator (30) having a symmetrical oscillation mode for which a center of mass of the assembly comprising the microcantilever (22) and the additional microcantilever (25) remains stationary.

11. The system (1) according to claim 10, wherein:
- the microcantilever (22) and the additional microcantilever (25) are etched into a membrane (7), formed by a first material,
- the additional microcantilever (25) is separated from a main, fixed part (70) of said membrane by a narrow slit which extends parallel to said additional microcantilever (25),
- at least a part of a top face of the additional microcantilever (25) is covered by said first electrode (43), formed by a second material being electrically conductive,
- said second electrode (44) extends side by side with the first electrode (43), parallel to the first electrode, and over the fixed main part (70) of said membrane, on another side of said slit, and wherein
- said microcantilever (22) has a top face that is substantially devoid of said electrically conductive second material.

12. The system (1) according to one of the preceding claims, comprising an electrical resonant circuit (40) including said electrical capacitor (42) as well as an inductor (41).

13. The system (1) according to claim 12, wherein said inductor (41) includes an electrical track of very small thickness made of a superconducting material chosen so that said track has a high kinetic inductance.

14. The system (1) according to claim 13, wherein said thickness is less than 20 or even 10 nanometers and wherein the superconducting material is one of the following materials: titanium nitride, niobium nitride or a granular superconducting material.

15. A method for manufacturing an electro-optical conversion system (1), according to one of the preceding claims, comprising an opto-mechanical device, from a substrate comprising a silicon oxide layer (6) and a silicon layer (7) on the silicon oxide layer, the method comprising the following steps of:
- lithographing and etching the silicon layer (7) and the silicon oxide layer (6) covering it, in a pattern defining:
∘ the mechanical resonator (30),
∘ the ring cavity (10), and
∘ the "zipper" type element (20), and then
- etching the silicon oxide layer (6) by chemical attack, to release the mechanical resonator (30) and the ring cavity (10),
the method also including making, on the silicon oxide layer, the electrical capacitor (42).
